# EUROPEAN PATENT APPLICATION

(11) **EP 4 799 744 A1**
(43) Date of publication of application: **02.09.2026**
(21) Application number: 25305272.4
(22) Date of filing: 28.02.2025
(51) Int. Cl.: B07B 7/086, B07B 7/12, A01F 12/44

(54) **AN APPARATUS AND A METHOD FOR RETRIEVING UNMATURE WHEAT SEEDS**

(71) Applicant: Limagrain Europe, 63360 Saint-Beauzire (FR)
(72) Inventor: Stoffijn, Niek, 4411 Rilland (NL); De Beule, Patrick, 4411 Rilland (NL); Van De Pas, Bert, 4411 Rilland (NL); Van Der Velde, Karin, 4411 Rilland (NL)
(74) Representative: Lavoix

(57) **Abstract**

An apparatus (1), for retrieving unmature wheat seeds from a wheat ear (5), the apparatus comprising a tube (7), comprising an input end (9) and an output end (11) coaxial to a main axis (X), the tube delineating an interior volume (15) configured to receive the wheat ear inserted through the input end, and at least one radial nozzle (27), positioned between the input end and the output end, the at least one radial nozzle being configured to blow air pulses oriented radially inwards relative to the main axis inside the interior volume.

## Description

The present invention concerns an apparatus and a method for retrieving unmature wheat seeds.

Wheat refers to cereals of the genus Triticum.

The wheat genetic heritage is routinely used in order to create new wheat variety, with the help of Double Haploids. This technique is often used to create double haploids to speed up plant breeding. Double haploids are plants that are genetically uniform and homozygous, produced by doubling the chromosome set of haploid cells, usually obtained from pollen or ovules. This process allows breeders to quickly stabilize desirable traits in crops, reducing the time needed for traditional breeding and advancing multiple generations at once, all while improving traits like yield, disease resistance, and climate tolerance. This technique belongs to rapid cycling which allows breeder to go faster (Jacquier, N.M.A., Gilles, L.M., Pyott, D.E. et al. Puzzling out plant reproduction by haploid induction for innovations in plant breeding. Nat. Plants 6, 610-619 (2020).

The genetic heritage of the wheat is contained in unmature wheat seed. The terms "unmature wheat seed" refer to a wheat seed 10 to 20 days after the pollination of that wheat (Bains, N.S.; Ravi, J.S.; Gosal, S.S.Production of wheat haploids through embryo rescue from wheat X maize crosses. Current Science 69(7): 621-623. 1995). The unmature wheat seeds have a humidity level comprised between 50 and 70% and the sugars from the albumen are not yet completely transformed into raffinose starch. The unmature wheat seeds have a milky or pasty appearance. The unmature wheat seeds also are very fragile and the use of traditional harvester apparatus tends to damage the unmature wheat seeds, to the extent that growing to the next generation is no more possible.

The main outlet for wheat in the food industry is the processing of wheat into flour (soft wheat) or semolina (durum wheat). The use of immature wheat embryos is also relevant to the food industry. They may be used for their different characteristics, compared to mature embryos, with notable differences in humidity or starch content as developed in WO 2023/281229.

The invention aims at creating an apparatus for retrieving unmature wheat seeds without damaging the wheat seeds.

To this end, aspects of the invention pertain to an apparatus, for retrieving unmature wheat seeds from a wheat ear, the apparatus comprising:
- a tube, comprising an input end and an output end coaxial to a main axis, the tube delineating an interior volume configured to receive the wheat ear inserted through the input end, and
- at least one radial nozzle, positioned between the input end and the output end, the at least one radial nozzle being configured to blow air pulses oriented radially inwards relative to the main axis inside the interior volume.

Thanks to the invention, more precisely thanks to the inclined nozzle, the apparatus efficiently separates the wheat seeds from the wheat stalk without damaging the wheat seed. Indeed, the swirling air flow blown by the inclined nozzle tends to shake wheat chaffs of the wheat ear relative to the wheat stalk. This facilitates detachment of the wheat chaffs from the wheat stalk. The swirling air also tends to pull onto the wheat chaffs, which effectively detaches them from the wheat stalk and carries them away towards the output end. Thanks to the air flow, the wheat chaffs are not folded relative to the wheat stalk so that the wheat chaffs, comprising the wheat seeds and wheat husks, are not damaged and are easily separated from the wheat stalk. Thus, the invention protects the fragile wheat seeds during the retrieving. Hence, the intact wheat seeds can be conveniently and automatically retrieved.

According to advantageous but optional aspects, the apparatus may incorporate one or more of the following features, considered alone or according to any technically allowable combination:
- the apparatus comprises at least two radial nozzles, said radial nozzles being equally distributed around the main axis,
- said radial nozzles are configured so that the radial nozzles generate an air pulse in a simultaneous or consecutive manner,
- the apparatus further comprises an inclined nozzle, configured for blowing an air flow inside the interior volume, wherein the inclined nozzle is oriented obliquely relative to a radius of the main axis, towards the main axis, in projection into a radial plane orthogonal to the main axis, and obliquely relative to the main axis, towards the output end, in projection into an axial plane including the main axis, so that the air flow blown by the inclined nozzle swirls around the main axis towards the output end,
- the inclined nozzle is positioned between the input end and the at least one radial nozzle,
- the inclined nozzle is oblique relative the main axis with a first angle comprised between 15° and 60°,
- the inclined nozzle is oblique relative to the radius with a second angle comprised between 5° and 50°,
- a first length of the tube measured parallel to the main axis from the input end to the inclined nozzle is smaller or equal to 30 centimeters and/or a second length of the tube measured parallel to the main axis from the output end to the inclined nozzle is comprised between 5 centimeters and 45 centimeters,
- a third length of the tube measured parallel to the main axis from the input end to the output end is comprised between 10 centimeters and 50 centimeters,
- a diameter of the tube measured perpendicularly to the main axis is comprised between 2 centimeters and 5 centimeters,
- the apparatus comprises a diverting system, comprising a seeds receptacle, a waste receptacle, and an input, connected to the output end for receiving wheat husks of the wheat ear and the unmature wheat seed, which were separated in the tube, wherein the diverting system is configured for diverting the received wheat husks towards the waste receptacle and the received unmature wheat seeds into the seeds receptacle,
- the diverting system comprises a cyclonic chamber, connecting to the input to the seeds receptacle and the waste receptacle.

According to a second aspect of the invention, a method for retrieving unmature wheat seeds from a wheat ear, the method comprising:
- inserting the wheat ear, comprising a wheat stalk and wheat chaffs, comprising wheat seeds and wheat husks, into the interior volume of the apparatus as defined above, thought the input end, and
- blowing the air pulses, by means of said at least one radial nozzle, for creating an air flow and separating wheat seeds from the wheat husks of the inserted wheat ear.

According to advantageous but optional aspects, the method may incorporate one or more of the following features, considered alone or according to any technically allowable combination:
- the method comprises, before wheat seeds being separated from the wheat husks by the at least one radial nozzle blowing the air flow inside the interior volume, by means of the inclined nozzle, for separating the wheat chaffs, comprising wheat seeds and wheat husks, from the wheat stalk of the inserted wheat ear and for carrying the separated wheat chaffs towards the output end,
- the method comprises:
   ∘ receiving the wheat husks and the unmature wheat seeds from the output end into the input of the diverting system, and
   ∘ diverting, by means of the diverting system, the received wheat husks towards the waste receptacle and the received unmature wheat seeds into the seeds receptacle.

The invention will be better understood, and other advantages thereof will appear more clearly, in light of the following description of an apparatus, provided solely as a nonlimiting example and done in reference to the appended drawings, in which:
[Fig. 1] Figure 1 is a cross-section of an apparatus according to an embodiment of the invention,
[Fig. 2] Figure 2 is a cross section into the plan II-II of the apparatus of the figure 1,
[Fig. 3] Figure 3 is a perspective view of a tube and nozzles of the apparatus of the figure 1, and

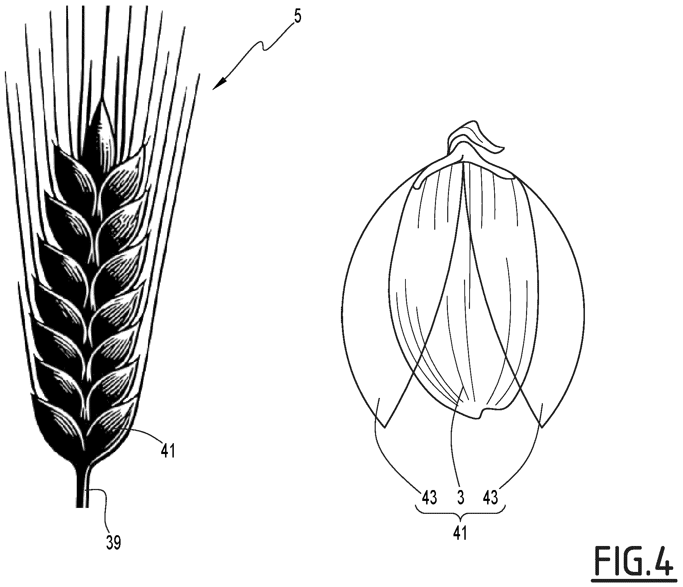

[Fig. 4] Figure 4 is a detailed view of a wheat ear.

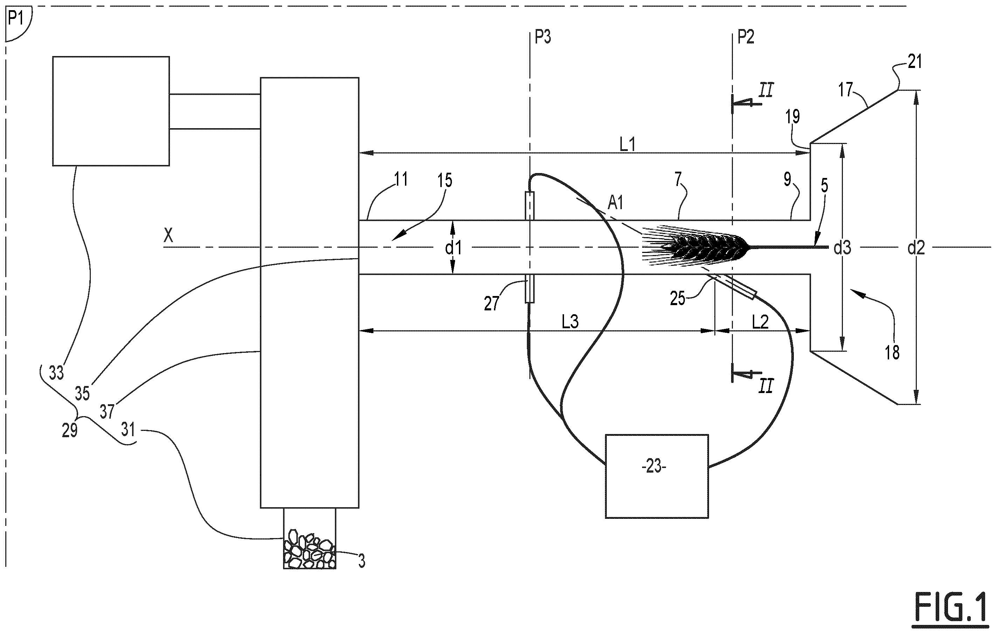

An apparatus 1, for retrieving unmature wheat seeds 3 from a wheat ear 5 is represented in figure 1. The wheat ear 5 comprises a wheat stalk 39.

The apparatus comprises a tube 7. The tube 7 comprises an input end 9 and an output end 11. The input end 9 and the input end 11 are coaxial to a main axis X of the apparatus 1. The tube extends along the main axis X from the input end 9 to the output end 11. A length L1 of the tube 7 is measured parallel to the main axis X from the input end 9 to the output end 11. Advantageously, the length L1 is comprised between 10 centimeters and 50 centimeters.

The tube 7 comprises a cylindrical wall 13 delineating an interior volume 15 extending along the main axis X. The cylindrical wall 13 has a circular base. The interior volume 15 is configured to receive the wheat ear 5 inserted through the input end 9.

The cylindrical wall 13 defines a diameter d1 of the tube 7. The diameter d1 is measured perpendicularly to the main axis X between two points of the cylindrical wall 13 diametrically opposed. Advantageously, the diameter d1 is comprised between 2 centimeters and 5 centimeters. In other terms, the diameter d1 is bigger than a diameter of the wheat ear 5 so that the wheat ear 5 can be inserted into the tube 7.

The apparatus also comprises an input collar 17. The input collar 17 delineated an input volume 18. The input collar 17 is flared. More precisely, a first end 19 of the input collar 17 defines a first diameter d2, measured perpendicularly to the main axis X, superior to a second diameter d3, measured perpendicularly to the main axis X, of a second end 21 of the input collar 17. The second end 21 of the input collar 17 is connected to the input end 9 so that the diameter of the input collar 17 decreases in the direction of the input end 9. Thus, the input volume 18 is connected to the interior volume 15 and directs the wheat ear 5 into the tube 7.

The apparatus 1 comprises a pressurized air system 23. The air pressurised air system produces pressurized air.

The apparatus 1 comprises an inclined nozzle 25. The inclined nozzle 25 is directed by an incline nozzle axis A1.

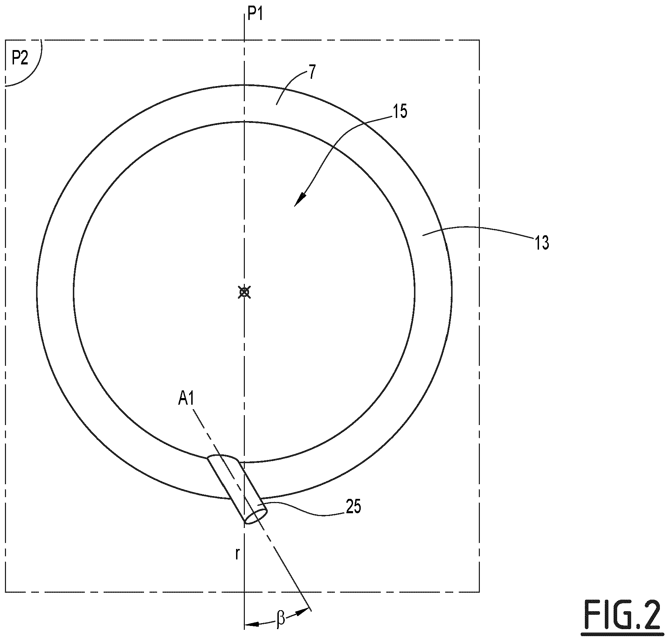

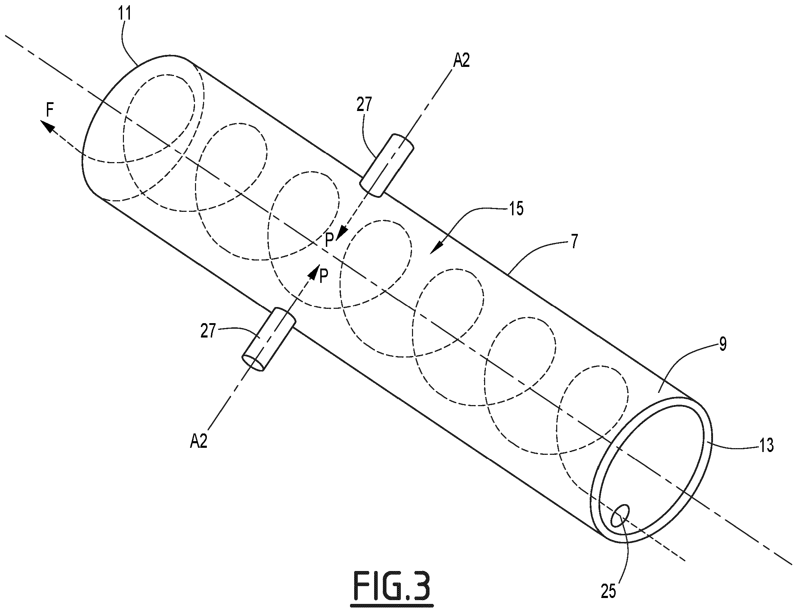

The inclined nozzle 25 is connected to the pressurized air system 23. As shown in figure 2, the inclined nozzle 25 crosses through the cylindrical wall 13 and connects the pressurized air system 23 to the interior volume 15. Thus, the inclined nozzle 25 is configured to blow an air flow F generated by the pressurized air system 23 inside the interior volume 15 as shown in figure 3.

The inclined nozzle 25 is oriented obliquely relative to the main axis X. More precisely, considering an axial plane P1 of figure 1 comprising the main axis X, the inclined nozzle axis A1 is inclined relative to the main axis X and directed towards the output end 11. Advantageously, a first angle α, measured between the inclined nozzle axis A1 and the main axis X, is comprised between 15° and 60°.

The inclined nozzle 25 is oriented obliquely relative to a radius r of the main axis X, the radius r extending perpendicularly to the main axis X. More precisely, in a radial plane P2, the inclined nozzle axis A1 is inclined relative to the radius r and directed to the main axis X. Advantageously, a second angle β, measured between the inclined nozzle axis A1 and the radius r, is comprised between 5° and 50°.

Thanks to the inclination of the inclined nozzle 25 and the circular base of the cylindrical wall 13, the air flow F blown inside the tube 7 swirls around the main axis X towards the output end 11. More precisely, the diameter d1 of the tube 7 and the inclination of the inclined nozzle 25 have to be adapted to each other. Indeed, a diameter d1 too high or a wrong inclination of the inclined nozzle 25 prevents the formation of a swirling air flow F following the cylindrical wall 13.

The length L1 of the tube 7 measured parallel to the main axis X from the input end 9 to the output end 11 comprises a length L2 of the tube 7 measured parallel to the main axis X from the input end 9 to the inclined nozzle 25 and a length L3 of the tube 7 measured parallel to the main axis X from the output end 11 to the inclined nozzle 25.

Advantageously, the length L2 of the tube 7 is smaller or equal to 30 centimeters.

Advantageously, the length L3 of the tube 7 is comprised between 5 centimeters and 45 centimeters.

Advantageously, the apparatus 1 comprises at least one radial nozzle 27. In this example, the apparatus comprises two radial nozzles 27. Each radial nozzle 27 is directed by a radial nozzle axis A2. Each radial nozzle axis A2 extends perpendicularly to the main axis X. The two radial nozzles 27 cross through the cylindrical wall 13 and connects the pressurized air system 23 to the interior volume 15. Thus, each radial nozzle 27 is configured to generate an air pulse P in a simultaneous or consecutive manner, from the pressurize air provided by the pressurized air system 23, inside the interior volume 15 as shown in figure 3. The air pulses P are oriented radially inwards relative to the main axis X.

The two radial nozzles 27 are positioned in a same nozzle plan P3, the nozzles plan P3 being perpendicular to the main axis X. The nozzles plan P3 is positioned, parallel to the main axis X, between the inclined nozzle 25 and the output end 11.

Advantageously, the apparatus 1 comprises a diverting system 29. The diverting system 29 comprises a seed receptacle 31, a waste receptacle 33 and an input 35. The input 35 is connected to the output end 11 of the tube 7.

Advantageously, the diverting system 29 also comprises a cyclonic chamber 37. The cyclonic chamber 37 connects the input 35 to the seeds receptacle 31 and the waste receptacle 33. The seeds receptacle 31 is positioned vertically below the cyclonic chamber 37 and the waste receptacle 33 is positioned vertically above the seeds receptacle 31.

A method for retrieving unmature wheat seeds 3 from a wheat ear 5 with the apparatus 1 is described below.

A user holds the wheat ear 5 by its wheat stalk 39 and inserts the wheat ear 5 into the interior volume 15 of the apparatus 1 through the input end 9. The swirling air flow F blown by the inclined nozzle 25, shakes wheat chaffs 41 of the wheat ear 5 around the wheat stalk. Thanks to the air flow F, the wheat chaffs 41 are not folded relative to the wheat stalk 39 so that the wheat chaffs 41, comprising the wheat seeds and wheat husks 43, are not damaged and are easily separated from the wheat stalk 39. Thus, the invention protects the fragile wheat seeds 3 during the retrieving.

The length L2 ensures that wheat ear 5 is sufficiently inserted inside the tube 7 before being in the air flow F so that the wheat chaffs 41 are not expelled through the input end 9.

The user removes the wheat stalk 39 offside the tube 7 and the air flow F carries the separated wheat chaffs inside the tube 7 towards the output end 11. The length L1, more precisely the length L3, enables the carrying of the separated wheat chaffs towards the output end 11. Indeed, if the length L3 is too short, interferences are created in the tube 7 and prevent the formation of an efficient swirling air flow. Besides if the length is too long, the power of the air flow generated by the pressurized air system 23 is not sufficient to carry the separated wheat chaffs 41 towards the output end 11.

While the wheat chaffs 41 are transported by the air flow F, the radial nozzles 25 generate air pulses P which separate wheat seeds 3 from the wheat husks 43. Then, the wheat seeds 3 and the wheat husks are carried from the output end 11 to the input 35 of the diverting system 29. Inside the cyclonic chamber 37, a cyclonic air flow diverts by gravity the wheat husks 43 and the wheat seeds 3. More precisely, the wheat husks 43, lighter than the wheat seeds 3, are diverted to the waste receptacle 33 and the wheat seeds go down to the seeds receptacle 31. Thus the user retrieves intact wheat seeds 3 separately from the rest of the wheat ear 5.

In a non-shown variant, the number of radial nozzles 27 is an even number greater or equal to 4. The radial nozzles 27 are positioned on the nozzles plan P3 and equally distributed around the main axis X. The radial nozzles 27 are configured so that one out of two nozzles is generating an air pulse simultaneously. In other terms, if the apparatus 1 comprises 6 radial nozzles, numerated successively 1 to 6, at a given time only the first, third and fifth radial nozzles generate an air pulse simultaneously and then only the second, fourth and sixth radial nozzles generate another air pulse simultaneously. In a non-shown variant, the number of radial nozzles 27 is an odd number and the radial nozzles generate an air pulse P in a consecutive manner. Thanks to the alternation of the radial nozzles generating air pulses, the swirling of the air flow F is increased. It is to be understood that the alternation of the radial nozzles generating the air pulse can be modified, for instance the alternation could be one of three or one of six.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An apparatus (1), for retrieving unmature wheat seeds (3) from a wheat ear (5), the apparatus (1) comprising:
- a tube (7), comprising an input end (9) and an output end (11) coaxial to a main axis (X), the tube (7) delineating an interior volume (15) configured to receive the wheat ear (5) inserted through the input end (9), and
- at least one radial nozzle (27), positioned between the input end (9) and the output end (11), the at least one radial nozzle (27) being configured to blow air pulses oriented radially inwards relative to the main axis (X) inside the interior volume (15).

2. The apparatus according to claim 1, wherein the apparatus comprises at least two radial nozzles (27), said radial nozzles (27) being equally distributed around the main axis (X).

3. The apparatus according to claim 2, wherein said radial nozzles (27) are configured so that the radial nozzles (27) generate an air pulse (P) in a simultaneous or consecutive manner.

4. The apparatus according to claims 1 to 3, wherein the apparatus further comprises an inclined nozzle (25), configured for blowing an air flow (F) inside the interior volume (15), wherein the inclined nozzle (25) is oriented obliquely relative to a radius (r) of the main axis (X), towards the main axis (X), in projection into a radial plane (P2) orthogonal to the main axis (X), and obliquely relative to the main axis (X), towards the output end (11), in projection into an axial plane (P1) including the main axis (X), so that the air flow (F) blown by the inclined nozzle (25) swirls around the main axis (X) towards the output end (11).

5. The apparatus according to claim 4 wherein the inclined nozzle (25) is positioned between the input end (9) and the at least one radial nozzle (27).

6. The apparatus (1) according to any one of claims 4 or 5, wherein the inclined nozzle (25) is oblique relative the main axis (X) with a first angle (α) comprised between 15° and 60°.

7. The apparatus (1) according to any one of claims 4 to 6, wherein the inclined nozzle (25) is oblique relative to the radius (r) with a second angle (β) comprised between 5° and 50°.

8. The apparatus (1) according to any one of claims 4 to 7 wherein a first length (L2) of the tube (7) measured parallel to the main axis (X) from the input end (9) to the inclined nozzle (25) is smaller or equal to 30 centimeters and/or a second length (L3) of the tube (7) measured parallel to the main axis (X) from the output end (11) to the inclined nozzle (25) is comprised between 5 centimeters and 45 centimeters.

9. The apparatus (1) according to any one of the previous claims, wherein a third length (L1) of the tube (7) measured parallel to the main axis (X) from the input end (9) to the output end (11) is comprised between 10 centimeters and 50 centimeters.

10. The apparatus (1) according to any one of the previous claims, wherein a diameter (d1) of the tube (7) measured perpendicularly to the main axis (X) is comprised between 2 centimeters and 5 centimeters.

11. The apparatus (1) according to any one of the previous claims comprising a diverting system (29), comprising a seeds receptacle (31), a waste receptacle (33), and an input (35), connected to the output end (11) for receiving wheat husks (43) of the wheat ear (5) and the unmature wheat seed, which were separated in the tube (7), wherein the diverting system (29) is configured for diverting the received wheat husks (43) towards the waste receptacle (33) and the received unmature wheat seeds (3) into the seeds receptacle (31).

12. The apparatus (1) according to claim 11, wherein the diverting system (29) comprises a cyclonic chamber (37), connecting to the input (35) to the seeds receptacle (31) and the waste receptacle (33).

13. A method, for retrieving unmature wheat seeds (3) from a wheat ear (5), the method comprising:
- inserting the wheat ear (5), comprising a wheat stalk (39) and wheat chaffs (41), comprising wheat seeds (3) and wheat husks (43), into the interior volume (15) of the apparatus (1) according to any one of the preceding claims, thought the input end (9), and
- blowing the air pulses, by means of said at least one radial nozzle (27), for creating an air flow and separating wheat seeds (3) from the wheat husks (43) of the inserted wheat ear (5).

14. The method according to claim 13, wherein the apparatus (1) is according to any one of claims 4 to 13 and wherein the method comprises, before wheat seeds (3) being separated from the wheat husks (43) by the at least one radial nozzle (27):
- blowing the air flow (F) inside the interior volume (15), by means of the inclined nozzle (25), for separating the wheat chaffs (41), comprising wheat seeds (3) and wheat husks (43), from the wheat stalk (39) of the inserted wheat ear (5) and for carrying the separated wheat chaffs (41) towards the output end (11).

15. The method according to any one of claims 13 or 14 wherein the apparatus (1) is according to any one of claims 12 or 13 and wherein the method comprises:
- receiving the wheat husks (43) and the unmature wheat seeds (3) from the output end (11) into the input (35) of the diverting system (29), and
- diverting, by means of the diverting system (29), the received wheat husks (43) towards the waste receptacle (33) and the received unmature wheat seeds (3) into the seeds receptacle (31).
